# FASCICULE DE BREVET EUROPEEN

(11) **EP 2 008 972 B1**
(45) Date de publication et mention de la délivrance du brevet: **14.12.2011**
(21) Numéro de dépôt: 08290455.8
(22) Date de dépôt: 14.05.2008
(51) Int. Cl.: C01B 33/38

(54) **Procédé de préparation de magadiite à partir du structurant N,N,N',N'-tetramethyl-N,N'-diben zylhexanediammonium**
Verfahren zur Herstellung von Magadiit aus dem N,N,N',N'-Tetramethyl-N,N'-Dibenzylhexandiammonium-Strukturanten
Method of preparing magadiite using the N,N,N',N'-tetramethyl-N,N'-dibenzylhexanediammonium structurant

(30) Priorité: 28.06.2007 FR 0704739
(43) Date de publication de la demande: 31.12.2008
(73) Titulaire: IFP Energies nouvelles, 92852 Rueil-Malmaison Cedex (FR)
(72) Inventeur: Fecant, Antoine, 69530 Brignais (FR); Bats, Nicolas, 69320 Feyzin (FR); Guillon, Emmanuelle, 69390 Vernaison (FR)

(56) Documents cités:
- EP-A- 1 584 604
- WO-A-88/00092
- US-A- 4 626 421

## Description

### Domaine de l'invention

L'invention concerne le domaine de la préparation de solides constitués de magadiite. Il s'agit de solides lamellaires à base de silicates, connus également sous le nom de solides lamellaires de type phyllosilicates ou silicates lamellaires. On entend par solide lamellaire à base de silicate un composé solide formé de couches (ou feuillets) superposées mais séparées les unes des autres d'une distance variant entre 2 et 5 Å, lesdites couches étant constituées de silicium arrangé en coordination tétraédrique (SiO₄). D'autres éléments que le silicium Si peuvent être présents dans le solide également en position tétraédrique.

### Art antérieur

Parmi les silicates lamellaires, on peut citer la magadiite, natrosilite, kenyaite, makatite, nekoite, kanemite, okenite, dehayelite, macdonalite et rhodesite.

Ces solides existent souvent à l'état naturel avec une composition du type AₓSi_{y}O_{z}, nH₂O, avec 1 ≤ x ≤ 15, 2 ≤ y ≤ 32, 4 ≤ z ≤ 80 et 0 ≤ n ≤ 20 (x, y, z et n étant des nombres entiers ou rationnels), A pouvant être, par exemple, un élément sodium ou potassium. De tels solides lamellaires présentent, par exemple, la composition Na₂Si₁₄O₂₉·9H₂O pour la magadiite et la composition Na₂Si₂₀O₄₁·10H₂O pour la kenyaite. Les solides obtenus par synthèse présentent la même composition que les solides présents à l'état naturel. Ces silicates lamellaires, en particulier la magadiite, présentent souvent une structure tridimensionelle, avec des interactions de type Van der Walls entre les feuillets ainsi qu'une faible surface spécifique.

Ces silicates lamellaires et en particulier la magadiite possèdent des propriétés d'absorption et d'échange qui sont intéressantes. Ces solides sont particulièrement adaptés pour l'adsorption d'eau ou de molécules organiques ainsi que pour l'échange cationique de surface. Récemment, les silicates lamellaires ont été largement étudiés pour leur capacité à devenir un solide acide par échange protonique. D'autres études ont également montré que l'introduction de piliers dans les espaces interlamellaires permet de créer une mésoporosité et d'augmenter la surface spécifique.

Il est connu des demandes de brevet WO 88/00091 et WO 88/00092 de synthétiser un silicate lamellaire ponté à partir d'un silicate lamellaire constitué par de la magadiite de synthèse laquelle a été préparée en utilisant un structurant organique choisi parmi le chlorure de benzyltriéthylammonium, le chlorure de benzyltriméthylammonium, le chlorure de dibenzyldiméthylammonium, le N,N'-diméthylpiperazine, la triéthylamine, ou d'autres composés quaternaires ou des amines hétérocycliques.
Il est également connu de la demande de brevet WO 91/12204 de synthétiser un silicate lamellaire cristallisé de type kenyaite en utilisant un composé organique sélectionné parmi une alkylamine, une trialkylamine, un composé tétraalkylammonium et une diamine triméthylhexaméthylenediamine, ledit alkyl ayant de 1 à 12 atomes de carbone.
Il est connu de la demande de brevet EP -A-1.559.681 de synthétiser des solides lamellaires à base de silicates de type kenyaite et magadiite en utilisant un structurant organique choisi parmi la tyramine, le 4-aminophénol, le trans-4-aminocyclohexanol, le 2-(4-amino-phényl)-éthanol, ou d'autres composés comportant au moins un groupement alcool et au moins un groupement amine séparés par une chaîne hydrocarbonée ayant de 1 à 20 atomes de carbone.

### Description sommaire de l'invention

L'invention a pour objet un procédé de préparation d'un solide lamellaire cristallisé constitué de magadiite consistant à procéder dans une étape (i) au mélange d'au moins une source de silice, d'au moins un sel de N,N,N',N'-tétraméthyl-N,N'-dibenzylhexanediammonium, d'au moins un métal alcalin et/ou alcalino-terreux M et de l'eau puis à procéder dans une étape (ii) au traitement hydrothermal dudit mélange jusqu'à ce que ledit solide lamellaire cristallisé constitué de magadiite se forme. De manière avantageuse, ledit mélange formé au cours de ladite étape (i) comprend au moins une source d'au moins un élément X à coordinence tétraédrique et différent du silicium.

Il a été découvert que, de manière surprenante, un structurant organique azoté comportant deux fonctions ammoniums quaternaires séparées par le motif d'une chaîne méthylène -(CH₂)- répété 6 fois, un sel de N,N,N',N'-tétraméthyl-N,N'-dibenzylhexanenediammonium, mis en mélange avec une source de silice, au moins un métal alcalin et/ou alcalino-terreux et de l'eau, conduit à la production d'une magadiite de haute pureté. Le procédé selon l'invention conduit le plus souvent à une magadiite pure, en l'absence de toute autre phase cristallisée ou amorphe. La magadiite obtenue par le procédé de l'invention est obtenue avec une meilleure sélectivité que les solides constitués de magadiite obtenus selon les procédés de l'état de la technique antérieure. De plus, une telle magadiite, préparée par le procédé selon l'invention, est obtenue avec une très bonne cristallinité. La pureté et la sélectivité sont déterminées par diffraction des rayons X. Par ailleurs, le procédé de préparation du solide lamellaire constitué de magadiite selon l'invention est avantageux car ledit solide est obtenu selon un temps de synthèse raccourci par rapport aux solides préparés selon les procédés de l'état de la technique antérieure.

### Description détaillée de l'invention

La présente invention a pour objet un procédé de préparation d'un solide lamellaire cristallisé constitué de magadiite consistant à procéder dans une étape (i) au mélange d'au moins une source de silice, d'au moins un sel de N,N,N',N'-tétraméthyl-N,N'-dibenzylhexanediammonium, d'au moins un métal alcalin et/ou alcalino-terreux M et de l'eau puis à procéder dans une étape (ii) au traitement hydrothermal dudit mélange jusqu'à ce que ledit solide lamellaire cristallisé constitué de magadiite se forme.

Le sel de N,N,N',N'-tétraméthyl-N,N'-dibenzylhexanediammonium incorporé dans l'étape (i) du procédé de préparation selon l'invention est de préférence un dihalogénure de N,N,N',N'-tétraméthyl-N,N'-dibenzylhexanediammonium et de manière très préférée un dibromure de N,N,N',N'-tétraméthyl-N,N'-dibenzylhexanediammonium. Ledit sel est synthétisé par toute méthode connue de l'Homme du métier. S'agissant d'un dihalogénure de N,N,N',N'-tétraméthyl-N,N'-dibenzylhexanediammonium, on procède au mélange d'une mole de dihalogénohexane et d'au moins 2 moles de N-benzyldiméthylamine. Pour la synthèse du dibromure de N,N,N',N'-tétraméthyl-N,N'-dibenzylhexanediammonium, on procède au mélange d'une mole de 1,8-dibromohexane et d'au moins 2 moles de N-benzyldiméthylamine.

Ledit métal alcalin et/ou alcalino-terreux M incorporé dans l'étape (i) du procédé de préparation selon l'invention est choisi parmi le lithium, le potassium, le sodium et le calcium et le mélange d'au moins deux de ces métaux. De préférence, ledit métal M est un métal alcalin et de manière très préférée il s'agit du sodium.

Ladite source de silice incorporée dans l'étape (i) du procédé de préparation selon l'invention peut être l'une quelconque de celle couramment utilisée dans la synthèse de solides lamellaires cristallisés à base de silicates, par exemple de la silice en poudre, de l'acide silicique, de la silice colloïdale ou de la silice dissoute ou du tétraéthoxysilane (TEOS). Parmi les silices en poudre, on peut utiliser les silices précipitées, notamment celles obtenues par précipitation à partir d'une solution de silicate de métal alcalin, telle que des silices aérosils, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telle que "LUDOX". De manière préférée, la source de silicium est le LUDOX.
Conformément au procédé de préparation du solide lamellaire cristallisé constitué de magadiite selon l'invention, ledit mélange formé au cours de ladite étape (i) comprend avantageusement au moins une source d'au moins un élément X à coordinence tétraédrique et différent du silicium. De manière plus préférée, l'élément X est choisi dans le groupe formé par l'aluminium, le bore, le chrome, le fer, le gallium, l'indium, le nickel, le zirconium, le cobalt, le titane, le zinc, le cuivre, le niobium et l'europium et le mélange d'au moins deux de ces éléments. De manière encore plus préférée, l'élément X est l'aluminium. La source de l'élément X peut être tout composé comprenant l'élément X et pouvant libérer cet élément en solution aqueuse sous forme réactive. L'élément X peut être incorporé dans le mélange sous une forme oxydée XOₙ avec 1 ≤ n ≤ 3 (n étant un nombre entier ou un nombre rationnel), ou sous toute autre forme, telle que, par exemple, un diacétate de l'élément X, notamment Co(CH₃COO)₂, Ni(CH₃COO)₂, Zn(CH₃COO)₂, Cu(CH₃COO)₂, Cr(CH₃COO)₂ et Eu(CH₃COO)₂. Lorsque X est le titane, on utilise avantageusement Ti(EtO)₄, lorsque X est le zirconium, on utilise avantageusement Zr(OH)₄, lorsque X est le niobium, on utilise avantageusement Nb₂B₄O₇ ou Nb₂O₅. Dans le cas préféré où X est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Conformément au procédé de préparation selon l'invention, le mélange réactionnel obtenu à l'étape i) présente une composition chimique exprimée, en termes de moles d'oxydes, par la formule :

SiO₂ : w XOn : x M⁺OH⁻ : y H₂O : z RO

- w étant compris entre 0 et 0,5, de préférence entre 0 et 0,1, et de manière très préférée entre 0,001 et 0,1,
- x étant compris entre 0,001 et 1, de préférence entre 0,01 et 0,6,
- y étant compris entre 10 et 100,
- z étant compris entre 0,05 et 3, de préférence entre 0,1 et 1,
- n étant compris entre 1 et 3,
et où X est au moins un élément à coordinence tétraédrique et différent du silicium, de préférence choisi dans le groupe formé par l'aluminium, le bore, le chrome, le fer, le gallium, l'indium, le nickel, le zirconium, le cobalt, le titane, le zinc, le cuivre, le niobium et l'europium et le mélange d'au moins deux de ces éléments, de manière encore plus préférée X est l'aluminium, M est au moins un cation choisi parmi le lithium, le potassium, le sodium et le calcium et le mélange d'au moins deux de ces métaux, de préférence, le sodium, R est le N,N,N',N'-tétraméthyl-N,N'-dibenzylhexanediammonium. w, x, y et z représentent respectivement le nombre de moles de XOn, de M⁺OH⁻, de H₂O et de RO.

Conformément à l'étape (ii) du procédé selon l'invention, on procède au traitement hydrothermal dudit mélange réactionnel jusqu'à ce que ledit solide lamellaire cristallisé constitué de magadiite se forme. Le mélange réactionnel est avantageusement mis sous conditions hydrothermales sous une pression de réaction autogène, éventuellement en ajoutant du gaz, par exemple de l'azote, à une température de cristallisation comprise entre 100 et 200°C, de préférence entre 110°C et 170°C, de manière plus préférée entre 135 et 170°C et de manière encore plus préférée entre 145 et 170°C jusqu'à la formation des cristaux lamellaires de magadiite. La durée nécessaire pour obtenir la cristallisation varie généralement entre 1 et 7 jours, de préférence entre 1 et 4 jours, de manière plus préférée entre 1 et 2,5 jours et de manière encore plus préférée entre 1,5 et 2,5 jours. Pendant la durée de l'étape (ii) de cristallisation, le mélange réactionnel peut être vigoureusement agité ou ne pas l'être. Les conditions opératoires pour la cristallisation sont choisies par l'Homme du métier pour obtenir la magadiite pure, en l'absence de toute autre phase cristallisée ou amorphe. Le procédé de préparation selon l'invention est aussi hautement sélectif car il conduit à la magadiite pure dans les conditions opératoires de cristallisation données ci-dessus.

De préférence, le produit obtenu à l'issue de l'étape ii) de cristallisation est soumis à au moins une des étapes suivantes, de préférence à l'ensemble desdites étapes suivantes :
iii) une étape de séparation du solide lamellaire cristallisé du mélange de cristallisation,
iv) une étape de lavage du solide lamellaire cristallisé, et
v) une étape de séchage dudit solide lamellaire cristallisé.

Le solide cristallisé est généralement séparé du mélange selon l'étape iii) du procédé de préparation selon l'invention par toute méthode connue de l'Homme du métier telle que la filtration. Le solide est ensuite lavé à l'eau conformément à l'étape iv) du procédé selon l'invention, de préférence de l'eau dé-ionisée. L'étape v) de séchage est généralement réalisée à une température comprise entre 50 et 150°C pendant une durée allant de 12 à 30 heures. Le séchage est, de préférence, réalisé à pression atmosphérique mais peut également être effectué sous pression. A l'issue de l'ensemble de ces étapes, on obtient un solide lamellaire cristallisé constitué de magadiite.

Conformément à l'invention, il est avantageux de réaliser un échange cationique du métal alcalin et/ou alcalino-terreux introduit au cours de ladite étape i) du procédé de préparation dudit solide lamellaire cristallisé, ledit échange cationique étant réalisé avec des ions hydrogène à l'issue de l'étape v) de séchage du solide lamellaire. Cet échange cationique avec des protons confère de l'acidité au solide lamellaire cristallisé constitué de magadiite.

Les exemples qui suivent illustrent l'invention sans en limiter la portée.

### Exemple 1 : synthèse du dibromure de N,N,N',N'-tétraméthyl-N,N'-dibenzylhexane-diammonium

50 g de 1,8-dibromohexane (0,20 mole, 99%, Aldrich) sont ajoutés dans un ballon de 500 ml contenant 150 ml d'éthanol et 61 g de N-benzyldiméthylamine (0,45 mole, 99%, Aldrich). Le milieu réactionnel est agité et porté à reflux pendant 3 h. Le mélange est ensuite refroidi à température ambiante, versé dans 300 ml de diéthyléther puis filtré et lavé avec 100 ml de diéthyléther. Le solide obtenu est séché sous vide pendant 12 h. On obtient 74 g d'un solide blanc (soit un rendement de 98 %).
Le produit possède le spectre ¹H RMN attendu. ¹H RMN (D₂O, ppm/TMS) : 1,28 (4H,m) ; 1,75 (4H,m) ; 2,86 (12H,s) ; 3,10-3,15 (4H,m) ; 4,32 (4H,s) ; 7,37-7,43 (10H,m).

### Exemple 2 : synthèse de la magadiite silicique

19,8 g d'une suspension colloïdale de silice, connue sous le terme commercial Ludox HS-40 commercialisée par Aldrich, est incorporée dans une solution composée de 1,66 g de soude (prolabo), 11,332 g de dibromure de N,N,N',N'-tétraméthyl-N,N'-dibenzylhexanediammonium dans 67,17 g d'eau déionisée. Le mélange est agité vigoureusement pendant une demi-heure. Le mélange est ensuite transféré, après homogénéisation, dans un autoclave. L'autoclave est chauffé pendant 2 jours à 160°C sous agitation. Le produit cristallisé obtenu est filtré, lavé à l'eau déionisée (pour atteindre un pH neutre) puis séché une nuit à 100°C.
Le diffractogramme (DRX) effectué sur l'échantillon brut de synthèse est caractéristique de la magadiite pure.

### Exemple 3 : synthèse de la magadiite substituée avec de l'aluminium

19,797 g d'une suspension colloïdale de silice, connue sous le terme commercial Ludox HS-40 commercialisée par Aldrich, est incorporée dans une solution composée de 0,415 g d'aluminate de sodium (Carlo Erba), 1,457 g de soude (prolabo), 11,306 g de dibromure de N,N,N',N'-tétraméthyl-N,N'-dibenzylhexanediammonium dans 67,03 g d'eau déionisée. Le rapport Si/Al du gel de synthèse est de 30. Le mélange est agité vigoureusement pendant une demi-heure. Le mélange est ensuite transféré, après homogénéisation, dans un autoclave. L'autoclave est chauffé pendant 4 jours à 160°C sous agitation. Le produit cristallisé obtenu est filtré, lavé à l'eau déionisée (pour atteindre un pH neutre) puis séché une nuit à 100°C.
Le diffractogramme (DRX) effectué sur l'échantillon brut de synthèse est caractéristique de la magadiite pure.

### Exemple 4 : synthèse de la magadiite substituée avec de l'aluminium

13,87 g d'une suspension colloïdale de silice, connue sous le terme commercial Ludox HS-40 commercialisée par Aldrich, est incorporée dans une solution composée de 0,146 g d'aluminate de sodium (Carlo Erba), 1,09 g de soude (prolabo), 7,92 g de dibromure de N,N,N',N'-tetramethyl-N,N'-dibenzylhexanediammonium dans 46,97 g d'eau déionisée. Le rapport Si/AI du gel de synthèse est de 60. Le mélange est agité vigoureusement pendant une demi-heure. Le mélange est ensuite transféré, après homogénéisation, dans un autoclave. L'autoclave est chauffé pendant 4 jours à 150°C sous agitation. Le produit cristallisé obtenu est filtré, lavé à l'eau déionisée (pour atteindre un pH neutre) puis séché une nuit à 100°C.

Le diffractogramme (DRX) effectué sur l'échantillon brut de synthèse est caractéristique de la magadiite pure.

### Exemple 5 (non conforme à l'invention) : synthèse du dibromure de N,N,N',N'-tétraméthyl-N,N'-dibenzylbutanediammonium

50 g de 1,4-dibromobutane (0,23 mole, 99%, Aldrich) sont ajoutés dans un ballon de 500 ml contenant 150 ml d'éthanol et 72 g de N-benzyldiméthylamine (0,53 mole, 99%, Aldrich). Le milieu réactionnel est agité et porté à reflux pendant 10 h. Le mélange est ensuite refroidi à température ambiante, versé dans 300 ml de diethyléther puis filtré et lavé avec 100 ml de diethyléther. Le solide obtenu est séché sous vide pendant 12 h. On obtient 105 g d'un solide blanc (soit un rendement de 94 %).
Le produit possède le spectre ¹H RMN attendu. ¹H RMN (D₂O,ppm/TMS) : 1,79 (4H,m) ; 2,88 (12H,s) ; 3,23 (4H,m) ; 4,34 (4H,s) ; 7,49 (10H,m).

### Exemple 6 (non conforme à l'invention) : synthèse hydrothermale en présence de dibromure de N,N,N',N'-tétraméthyl-N,N'-dibenzylbutanediammonium en tant qu'agent structurant

13,9 g d'une suspension colloïdale de silice, connue sous le terme commercial Ludox HS-40 commercialisée par Aldrich, est incorporée dans une solution composée de 0,344 g d'aluminate de sodium (Carlo Erba), 1,11 g de soude (prolabo), 7,53 g de N,N,N',N'-tétraméthyl-N,N'-dibenzylbutanediammonium dans 47,07 g d'eau déionisée. Le mélange est agité vigoureusement pendant une demi-heure. Le mélange est ensuite transféré, après homogénéisation, dans un autoclave. L'autoclave est chauffé pendant 7 jours à 130°C dans une étuve sans agitation. Le produit obtenu est filtré, lavé à l'eau déionisée (pour atteindre un pH neutre) puis séché une nuit à 100°C.
L'analyse par diffraction des rayons X montre que le solide formé n'est constitué que de phases amorphes.

### Exemple 7 (non conforme à l'invention) : synthèse hydrothermale en présence de dibromure de N,N,N',N'-tétraméthyl-N,N'-dibenzylbutanediammonium en tant qu'agent structurant.

14,0 g d'une suspension colloïdale de silice, connue sous le terme commercial Ludox HS-40 commercialisée par Aldrich, est incorporée dans une solution composée de 1,26 g de soude (prolabo), 7,54 g de N,N,N',N'-tétramethyl-N,N'-dibenzylbutane-diammonium dans 47,22 g d'eau déionisée. Le mélange est agité vigoureusement pendant une demi heure. Le mélange est ensuite transféré, après homogénéisation, dans un autoclave. L'autoclave est chauffé pendant 4 jours à 160°C dans une étuve sans agitation. Le produit obtenu est filtré, lavé à l'eau déionisée (pour atteindre un pH neutre) puis séché une nuit à 100°C.
L'analyse par diffraction des rayons X montre que le solide formé n'est constitué que de phases denses telles que le quartz et la cristobalite ainsi que de zéolithe ZSM-12.

### Exemple 8 (non conforme à l'invention, selon WO 88/00091) : synthèse de magadiite substituée avec de l'aluminium en présence de chlorure de dibenzyldimethylammonium en tant qu'agent structurant.

24,5 g de chlorure de dibenzyldimethylammonium sont ajoutés à une solution contenant 0,63 g d'aluminate de sodium, 4,0 g d'hydroxyde de sodium et 30,0 g d'eau déionisée. Le mélange est ajouté à 134,0 g de silice colloïdale puis mélangé. Le mélange est chauffé à 140°C dans un réacteur statique pendant 21 jours. L'analyse par diffraction des rayons X indique que le produit obtenu est constitué de magadiite ainsi que de trace de mordenite.

## Revendications

1. Procédé de préparation d'un solide lamellaire cristallisé constitué de magadiite consistant à procéder dans une étape (i) au mélange d'au moins une source de silice, d'au moins un sel de N,N,N',N'-tétraméthyl-N,N'-dibenzylhexanediammonium, d'au moins un métal alcalin et/ou alcalino-terreux M et de l'eau puis à procéder dans une étape (ii) au traitement hydrothermal dudit mélange jusqu'à ce que ledit solide lamellaire cristallisé constitué de magadiite se forme.

2. Procédé de préparation selon la revendication 1 tel que ledit sel de N,N,N',N'-tétraméthyl-N,N'-dibenzylhexanediammonium est un dihalogénure de N,N,N',N'-tétraméthyl-N,N'-dibenzylhexanediammonium.

3. Procédé de préparation selon la revendication 1 ou la revendication 2 tel que ledit sel est un dibromure de N,N,N',N'-tétraméthyl-N,N'-dibenzylhexanediammonium.

4. Procédé de préparation selon l'une des revendications 1 à 3 tel que ledit métal alcalin et/ou alcalino-terreux M est choisi parmi le lithium, le potassium, le sodium et le calcium et le mélange d'au moins deux de ces métaux.

5. Procédé de préparation selon la revendication 4 tel que ledit métal alcalin et/ou alcalino-terreux M est le sodium.

6. Procédé de préparation selon l'une des revendications 1 à 5 tel que ladite source de silice incorporée dans ladite étape (i) est une silice colloïdale.

7. Procédé de préparation selon l'une des revendications 1 à 6 tel que ledit mélange formé au cours de ladite étape (i) comprend au moins une source d'au moins un élément X à coordinence tétraédrique et différent du silicium.

8. Procédé de préparation selon la revendication 7 tel que ledit élément X est l'aluminium.

9. Procédé de préparation selon l'une des revendications 1 à 8 tel que le mélange réactionnel obtenu à ladite étape (i) présente une composition chimique exprimée, en termes de moles d'oxydes, par la formule :
SO0₂ : w XOn : x M⁺OH⁻ : y H₂O : z RO
w étant compris entre 0 et 0,5, x étant compris entre 0,001 et 1, y étant compris entre 10 et 100, z étant compris entre 0,05 et 3, n étant compris entre 1 et 3,
et où X est au moins un élément à coordinence tétraédrique et différent du silicium, M est au moins un cation choisi parmi le lithium, le potassium, le sodium et le calcium et le mélange d'au moins deux de ces métaux, R est le N,N,N',N'-tétraméthyl-N,N'-dibenzylhexanediammonium, w, x, y et z représentant respectivement le nombre de moles de XOn, de M⁺OH⁻, de H₂O et de RO.

10. Procédé de préparation selon l'une des revendications 1 à 9 tel que ladite étape (ii) est mise en oeuvre par mise dudit mélange réactionnel sous conditions hydrothermales sous une pression de réaction autogène à une température de cristallisation comprise entre 135 et 170°C.

11. Procédé de préparation selon l'une des revendications 1 à 10 tel que la durée de ladite étape (ii) varie entre 1 et 4 jours.

12. Procédé de préparation selon l'une des revendications 1 à 11 tel que ledit produit issu de ladite étape (ii) de cristallisation est soumis à au moins :
iii) une étape de séparation du solide lamellaire cristallisé du mélange de cristallisation,
iv) une étape de lavage du solide lamellaire cristallisé, et
v) une étape de séchage dudit solide lamellaire cristallisé.

## Claims

1. A process for preparing a crystalline lamellar solid constituted by magadiite consisting, in a step (i), of mixing of at least one source of silica, at least one N,N,N', N'-tetramethyl-N,N'-dibenzylhexanediammonium salt, at least one alkali and/or alkaline-earth metal M and water, then in a step (ii), of treating said mixture hydrothermally until said crystalline lamellar solid constituted by magadiite is formed.

2. A preparation process according to claim 1, in which said N,N,N', N'-tetramethyl-N,N'-dibenzylhexanediammonium salt is a N,N,N', N'-tetramethyl-N,N'-dibenzylhexanediammonium dihalide.

3. A preparation process according to claim 1 or claim 2, in which said salt is a N,N,N', N'-tetramethyl-N,N'-dibenzylhexanediammonium dibromide.

4. A preparation process according to one of claims 1 to 3, in which said alkali and/or alkaline-earth metal M is selected from lithium, potassium, sodium and calcium and a mixture of at least two of said metals.

5. A preparation process according to claim 4, in which said alkali and/or alkaline-earth metal M is sodium.

6. A preparation process according to one of claims 1 to 5, in which said source of silica incorporated into said step (i) is a colloidal silica.

7. A preparation process according to one of claims 1 to 6, in which said mixture formed during said step (i) comprises at least one source of at least one element X with tetrahedral coordination which is different from silicon.

8. A preparation process according to claim 7, in which said element X is aluminium.

9. A preparation process according to one of claims 1 to 8, in which the reaction mixture obtained in said step (i) has a chemical composition expressed, in terms of moles of oxides, by the formula:
SiO₂: w XOn: x M⁺OH⁻: y H₂O: z RO
in which w is in the range 0 to 0.5, x is in the range 0.001 to 1, y is in the range 10 to 100,
z is in the range 0.05 to 3, n is in the range 1 to 3, and in which X is at least one element with tetrahedral coordination which is different from silicon, M is at least one cation selected from lithium, potassium, sodium and calcium and a mixture of at least two of said metals, R is N,N,N', N'-tetramethyl-N,N'-dibenzylhexanediammonium, and w, x, y and z respectively represent the number of moles of XOn, M⁺OH⁻, H₂O and RO.

10. A preparation process according to one of claims 1 to 9, in which said step (ii) is carried out by placing said reaction mixture under hydrothermal conditions at an autogenous reaction pressure and at a crystallization temperature in the range 135°C to 170°C.

11. A preparation process according to one of claims 1 to 10, in which the duration of said step (ii) is in the range 1 to 4 days.

12. A preparation process according to one of claims 1 to 11, in which said product from said crystallization step (ii) undergoes at least:
iii) a step for separating the crystalline lamellar solid from the crystallization mixture;
iv) a step for washing the crystalline lamellar solid; and
v) a step for drying said crystalline lamellar solid.

## Patentansprüche

1. Verfahren zur Herstellung eines kristallisierten Feststoffs mit Schichtgefüge, welcher aus Magadiit besteht, darin bestehend, in einem Schritt (i) mindestens eine Siliciumdioxidquelle, mindestens ein N,N,N',N'-Tetramethyl-N,N'-dibenzylhexandiammonium- Salz, mindestens ein Alkali- und/oder Erdalkalimetall M sowie Wasser zu vermischen, woraufhin die Mischung in einem Schritt (ii) einer hydrothermalen Behandlung unterzogen wird, bis sich der kristallisierte Feststoff mit Schichtgefüge, welcher aus Magadiit besteht, bildet.

2. Herstellungsverfahren nach Anspruch 1, derart, dass es sich bei dem N,N,N',N'-Tetramethyl-N,N'-dibenzylhexandiammonium-Salz um ein N,N,N',N'-Tetramethyl-N,N'-dibenzylhexandiammonium-Dihalogenid handelt.

3. Herstellungsverfahren nach Anspruch 1 oder Anspruch 2, derart, dass es sich bei dem Salz um ein N,N,N',N'-Tetramethyl-N,N'-dibenzylhexandiammonium-Dibromid handelt.

4. Herstellungsverfahren nach einem der Ansprüche 1 bis 3, derart, dass das Alkali- und/oder Erdalkalimetall M aus Lithium, Kalium, Natrium und Calcium sowie der Mischung mindestens zweier dieser Metalle ausgewählt ist.

5. Herstellungsverfahren nach Anspruch 4, derart, dass es sich sich bei dem Alkali- und/oder Erdalkalimetall M und Natrium handelt.

6. Herstellungsverfahren nach einem der Ansprüche 1 bis 5, derart, dass es sich bei der Siliciumdioxidquelle, welche in Schritt (i) eingearbeitet wird, um ein kolloidales Siliciumdioxid handelt.

7. Herstellungsverfahren nach einem der Ansprüche 1 bis 6, derart, dass die Mischung, die im Laufe des Schrittes (i) gebildet wird, mindestens eine Quelle mindestens eines Elements X umfasst, das eine tetraedrische Koordination hat und von Silicium verschieden ist.

8. Herstellungsverfahren nach Anspruch 7, derart, dass es sich bei dem Element X um Aluminium handelt.

9. Herstellungsverfahren nach einem der Ansprüche 1 bis 8, derart, dass die Reaktionsmischung, welche in Schritt (i) erhalten wird, eine chemische Zusammensetzung aufweist, die, in Mol an Oxiden, von der folgenden Formel ausgedrückt wird:
SiO₂ : w XOn : x M⁺OH⁻ : y H₂O : z RO
wobei w im Bereich von 0 bis 0,5 liegt, x im Bereich von 0,001 bis 1 liegt,
y im Bereich von 10 bis 100 liegt, z im Bereich von 0,05 und 3 liegt, n im Bereich von 1 bis 3 liegt, und wobei X mindestens ein Element ist, das eine tetraedrische Koordination hat und von Silicium verschieden ist, M mindestens ein Kation ist, das aus Lithium, Kalium, Natrium und Calcium sowie der Mischung mindestens zweier dieser Metalle ausgewählt ist, R N,N,N',N'-Tetramethyl-N,N'-dibenzylhexandiammonium ist, wobei w, x, y und z die Molanzahl an XOn, an M⁺OH⁻, an H₂O beziehungsweise an RO darstellen.

10. Herstellungsverfahren nach einem der Ansprüche 1 bis 9, derart, dass Schritt (ii) durchgeführt wird, indem die Reaktionsmischung hydrothermalen Bedingungen ausgesetzt wird, und zwar unter einem autogenen Reaktionsdruck bei einer Kristallisationstemperatur im Bereich von 135 bis 170 °C.

11. Herstellungsverfahren nach einem der Ansprüche 1 bis 10, derart, dass die Dauer des Schrittes (ii) zwischen 1 und 4 Tagen variiert.

12. Herstellungsverfahren nach einem der Ansprüche 1 bis 11, derart, dass das Produkt, welches beim Kristallisationsschritt (ii) entsteht, mindestens Folgendem unterzogen wird:
iii) einem Schritt des Abtrennens des kristallisierten Feststoffs mit Schichtgefüge von den Kristallisationsmischung,
iv) einem Schritt des Waschens des kristallisierten Feststoffs mit Schichtgefüge, und
v) einem Schritt des Trocknens des kristallisierten Feststoffs mit Schichtgefüge.
